# EUROPÄISCHE PATENTSCHRIFT

(11) **EP 1 483 802 B1**
(45) Veröffentlichungstag und Bekanntmachung des Hinweises auf die Patenterteilung: **07.06.2017**
(21) Anmeldenummer: 03743376.0
(22) Anmeldetag: 05.03.2003
(51) Int. Cl.: H01M 4/50, H01M 4/58

(54) **ELEKTROCHEMISCHE ZELLE FÜR EINE LITHIUMIONENBATTERIE MIT VERBESSERTER HOCHTEMPERATURSTABILITÄT**
ELECTROCHEMICAL CELL FOR A LITHIUM ION BATTERY WITH IMPROVED HIGH-TEMPERATURE STABILITY
CELLULE ELECTROCHIMIQUE POUR UNE PILE ION LITHIUM A STABILITE AUX HAUTES TEMPERATURES AMELIOREE

(30) Priorität: 05.03.2002 DE 10209477
(43) Veröffentlichungstag der Anmeldung: 08.12.2004
(73) Patentinhaber: Chemetall GmbH, 60487 Frankfurt (DE)
(72) Erfinder: PANITZ, Jan-Christoph, 60487 Frankfurt (DE); SCHADE, Klaus, 65205 Wiesbaden (DE); SCHWANZER, Britta, 63594 Hasselroth-Niedermittlau (DE); WIETELMANN, Ulrich, 61381 Friedrichsdorf (DE); STENGER, Stefan, 63755 Alzenau (DE)
(74) Vertreter: Uppena, Franz
(86) Internationale Anmeldenummer: PCT/EP2003/002238
(87) Internationale Veröffentlichungsnummer: WO 2003/075371

(56) Entgegenhaltungen:
- EP-A- 1 061 595
- WO-A-02/071528
- DE-C- 19 829 030
- SHOKOOHI F K ET AL: "INTERCALATION ELECTRODES FOR LITHIUM-ION BATTERIES: OPTIMIZATION BYLIMN2O4/LI AND C/LI CELLS" , PROGRESS IN BATTERIES & BATTERY MATERIALS, ITE-JEC PRESS INC, US, VOL. 14, PAGE(S) 173-197 XP000590064 Seite 174, letzter Absatz -Seite 175, Absatz 2 Seite 195, Absatz 1
- JANG D H ET AL: "DISSOLUTION OF SPINEL OXIDES AND CAPACITY LOSSES IN 4 V LI/LIXMN2O4CELLS" , JOURNAL OF THE ELECTROCHEMICAL SOCIETY, ELECTROCHEMICAL SOCIETY. MANCHESTER, NEW HAMPSHIRE, US, VOL. 143, NR. 7, PAGE(S) 2204-2211 XP000877486 ISSN: 0013-4651 Seite 2204, linke Spalte, Absatz 1; Tabellen 1,II Seite 2205, linke Spalte, Absätze 2,3
- GUYOMARD D ET AL: "LITHIUM METAL-FREE RECHARGEABLE LI1+XMN2O4/CARBON CELLS" , PROCEEDINGS OF THE SYMPOSIUM ON HIGH POWER, AMBIENT TEMPERATURE LITHIUM BATTERIES. PHOENIX, OCT. 13 - 17, 1991, PROCEEDINGS OF THE ANNUAL MEETING OF THE ELECTROCHEMICAL SOCIETY, PENNINGTON, ES, US, VOL. MEETING 180, PAGE(S) 113-126 XP000453550 Seite 114, Absätze 3,5

## Beschreibung

Die Erfindung betrifft die Verwendung eines Elektrolyten in einer elektrochemischen Zelle für eine Lithiumionenbatterie zur Verbesserung der Hochtemperaturstabilität.

In kommerziellen Lithiumionenbatterien findet Lithiumkobaltat (LiCoO₂) als Kathodenmaterial eine breite Verwendung. In solchen Lithiumionenbatterien dient Kohlenstoff als Anodenmaterial, und als Elektrolyt wird eine Lösung von Lithiumhexafluorophosphat (LiPF₆) in aprotischen Lösungsmitteln eingesetzt. LiCoO₂ wird vor allem aufgrund seiner hervorragenden elektrochemischen Eigenschaften eingesetzt. Von Nachteil dieser Kobaltverbindung sind die toxikologischen Eigenschaften. Außerdem ist LiCoO₂ vergleichsweise teuer.

Um die Nachteile des Kathodenmaterials LiCoO₂ zu vermeiden, wurde die Verwendung von auf Mangan basierenden Lithiummetalloxiden vorgeschlagen (T. Ohzuku, M. Kitagawa, T. Hirai, J. Electrochem. Soc., 137, p. 769 (1990)).

Der am einfachsten herzustellende Vertreter dieser Klasse ist der Lithiummanganspinell (LiMn₂O₄) welcher akzeptable elektrochemische Eigenschaften bei Raumtemperatur aufweist und auch ein besseres Sicherheitsverhalten im Vergleich zum LiCoO₂, z.B. beim Überladen der Zelle, aufweist. Von Nachteil des LiMn₂O₄ ist jedoch die mangelhafte elektrochemische Stabilität bei höheren Temperaturen. Mit elektrochemischer Stabilität wird hier die Veränderung der Ladungskapazität der Zelle in Abhängigkeit von der Zahl der Lade- bzw. Entladezyklen (Zyklenzahl) bezeichnet. Ein ideales Kathodenmaterial weist demnach eine konstante Ladungskapazität in Abhängigkeit von der Zyklenzahl auf. In der Regel soll ein Kathodenmaterial so beschaffen sein, dass bei Einsatz in einer kommerziellen Batterie nach 500 Zyklen die Ladungskapazität der Batterie nicht unter 80 % des Anfangswertes absinkt. einer kommerziellen Batterie nach 500 Zyklen die Ladungskapazität der Batterie nicht unter 80 % des Anfangswertes absinkt.

Während das LiMn₂O₄ bei Raumtemperatur einen minimalen Abfall der Ladungskapazität zeigt, verliert das gleiche Material bereits bei Temperaturen von 55 °C rapide an Ladungskapazität. Als Gründe für den rapiden Kapazitätsverfall bei erhöhten Temperaturen können angeführt werden:
- Der im Elektrolytmaterial LiPF₆ in Spuren vorhandene Fluorwasserstoff (HF) greift das Kathodenmaterial an, welches sich partiell auflösen kann.
- Aufgrund von Defekten im Kathodenmaterial und aufgrund von Abweichungen in der Stöchiometrie des LiMn₂O₄ (z.B. ein leichter Sauerstoffunterschuss gemäß LiMn₂O_{4-δ}) kann es zu strukturellen Veränderungen des Kathodenmaterials kommen (Y. Xia, T. Sakai, T. Fujieda, X. Q. Yang, X. Sun, Z. F. Ma, J. McBreen, M. Yoshio, J. Electrochem. Soc., 148(7), A723-A729, 2001).

Um die mangelnde Hochtemperaturbeständigkeit des LiMn₂O₄ zu verbessern, wurde zum einen vorgeschlagen, den Lithiummanganspinell LiMn₂O₄ zu dotieren, wobei als Dotierungselemente Alkalimetalle, Erdalkalimetalle, Übergangsmetalle sowie B, Al, Si, Ga und Ge eingesetzt werden (EP 0994073 A1). Zum anderen wurde vorgeschlagen, die Oberfläche des LiMn₂O₄-Kathodenmaterials mit Salzen der Elemente La, Bi, Pb, Ba, Zr, Y, Sr, Zn oder Mg zu beschichten oder zu imprägnieren (EP 1056143 A2). All diesen Verfahren ist gemeinsam, dass sie zusätzliche, zum Teil aufwendige Verfahrensschritte enthalten und zum Teil toxische Elemente verwenden, was für die Herstellung von elektrochemischen Zellen für Lithiumionenbatterien von Nachteil ist.

Die Verwendung einer Lösung von Lithiumhexafluorophosphat (LiPF₆) in aprotischen Lösungsmitteln als Elektrolyt ist aufgrund der Anwesenheit von Spuren von HF, welches insbesondere die Kathodenmaterialien angreifen kann, problematisch. Deshalb wurde in der DE 19829030 C1 die Verwendung von Lithium-bis(oxalato)borat (LOB oder LiBOB) in aprotischen Lösungsmitteln als Elektrolyt vorgeschlagen. Angell et al. beschreiben in "LiBOB as Salt for Lithium-Ion Batteries", ECS, 5, (1), A26-A29 (2002) eine elektrochemische Zelle mit einer Kathode welche ein auf Nickel basierendes Lithiummischoxid enthält, einer Anode aus einem Kohlenstoff-Material und einem Elektrolyten bestehend aus einer 1,0 molaren Lösung von LiBOB in einer Mischung aus 1:1 (Gew.-%) Ethylencarbonat (EC) und Ethylmethylcarbonat (EMC).

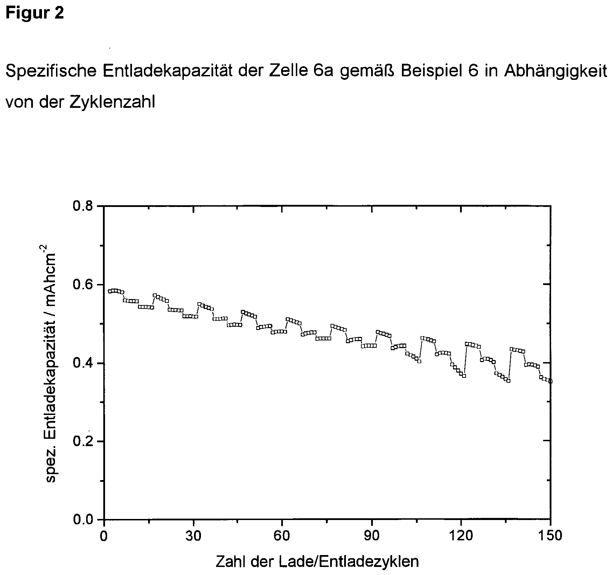

In Figur 2 dieser Veröffentlichung ist gezeigt, dass die Ladungseffizienz (= während der Entladung geflossene Ladungsmenge / während der Ladung geflossene Ladungsmenge) des Kathodenmaterials im ersten Zyklus eines Cyclovoltammogramm(CV)-Experimentes gerade einmal 86.1 % beträgt. Da die Wirkungsweise der Zelle auf der wechselseitigen Einlagerung (Insertion) des Lithiums in die Anode bzw. die Kathode beruht, und in einer solchen Zelle die Gesamtmenge an cyclisierbarem Lithium, welches sich im Ausgangszustand ausschließlich im Kathodenmaterial befindet, begrenzt ist, kann dieser hohe Verlust zu einem Absinken der tatsächlich nutzbaren Ladungskapazität der Zellen führen.

Ein weiterer Nachteil ergibt sich aus der Verwendung eines auf Nickel basierenden Lithiummischoxids, welches aufgrund der Toxizität von Nickel als problematisch anzusehen ist. Auch das Sicherheitsverhalten einer solchen Nickel enthaltenden Batterie ist im geladenen Zustand bekanntlich als kritisch anzusehen.

In der Veröffentlichung von Angell haben die Kathodenscheiben eine spezifische Kapazität von jeweils 0,93 mAh/cm². Von daher können die gemessenen Ladungskapazitäten nicht einen höheren Wert als 0,93 mAh/cm² annehmen. Trotzdem finden sich in der Figur 5 dieser Veröffentli-Aufgabe der Erfindung ist es, die Nachteile des Standes der Technik zu überwinden und insbesondere einen Elektrolyten vorzuschlagen, der in elektrochemischen Zellen für eine Lithiumionenbatterie auch bei höheren Temperaturen eine ausreichende elektrochemische Stabilität und eine hohe Ladungseffizienz gewährleistet, wobei die elektrochemischen Zellen möglichst wenig toxische Materialien enthalten und deren Inhaltsstoffe sich möglichst einfach recyclen lassen.

Gelöst wird die Aufgabe durch die Verwendung eines Elektrolyts, der als Leitsalz Lithiumbis(oxalato)borat (LOB) in aprotischen Lösungsmitteln enthält, in einer elektrochemischen Zelle,
deren Kathode ein Lithiummanganoxid mit Spinellstruktur enthält, wobei die Spinellstruktur stöchiometrisch sein oder eine Defektstruktur aufweisen kann (solche Spinelle sind z.B. beschrieben in R.J. Gummow et al., "Improved Capacity Retention in Recharcheable 4 V Lithium/Lithiummanganese Oxide (Spinel) Cells", Solid State lonics 69 (1994) 59-67).

Als Anode kann jede in elektrochemischen Zellen für Lithiumionenbatterien übliche Anode verwendet werden.

Bevorzugt enthält die elektrochemische Zelle zusätzlich einen dem Fachmann bekannten und aus einem mikroporösen Polymer (z.B. Polyolefin) bestehenden Separator, der die Anode und die Kathode elektrischen isoliert. Als Separatormaterial geeignet ist prinzipiell jedes Polymer, welches den Transport von Lithiumionen gestattet.

Die elektrochemische Zelle kann z.B. in Form einer Knopfzelle, einer zylindrischen, einer prismatischen oder einer stapelförmigen Zelle vorliegen. Eine zylindrische Zelle kann eine spiralenförmig aufgerollte Anordnung aus Kathode, Separatoren und Anode enthalten. Eine prismatische Zelle kann Eine zylindrische Zelle kann eine spiralenförmig aufgerollte Anordnung aus Kathode, Separatoren und Anode enthalten. Eine prismatische Zelle kann eine gewickelte oder gefaltete Anordnung aus Kathode, Separatoren und Anode enthalten.

Das als Kathodenmaterial verwendete spinellartige Lithiummanganoxid weist bevorzugt ein Li/Mn-Atomverhältnis von 0,5 bis 2 und ein O/Mn-Atomverhältnis von 2 bis 3 auf, wobei die rechnerische Oxidationszahl des Mangans bevorzugt von 3,0 bis 3,8 reicht, besonders bevorzugt von 3,3 bis 3,7. Beispiele für derartige Lithiummanganoxide sind LiMn₂O₄, LiMnO₂, Li₅Mn₄O₉ oder Li₇Mn₅O₁₂. Bevorzugte Lithiummanganoxide sind LiMn₂O₄, Li_{1,03}Mn_{1,97}O₄, Li_{1,05}Mn_{1,95}O₄, Li_{1,10}Mn_{1,90}O₄ bis Li_{1,22}Mn_{1,78}O₄.

Bevorzugt liegt der Wassergehalt des verwendeten Lithiummanganoxids bei < 1,5 Gew.-%, besonders bevorzugt bei < 1 Gew.-% und ganz besonders bevorzugt bei < 0,8 Gew.-%. Der Gehalt an sonstigen Verunreinigungen (Fremdelemente) liegt bevorzugt bei < 1,5 Gew.-%, besonders bevorzugt bei < 1 Gew.-% und ganz besonders bevorzugt bei < 0,8 Gew.-%.

Das Lithiummanganoxid wird bevorzugt als Pulver eingesetzt, dabei ist die Partikelgröße d₅₀ (gemessen mittels Lichtstreuung) bevorzugt 1 bis 100 µm, besonders bevorzugt 5 bis 20 µm.

Bevorzugt ist die Kathode so aufgebaut, dass das Lithiummanganoxid auf einem Stromsammler (z.B. Aluminiumfolie) aufgebracht ist. Dabei werden die Lithiummanganoxidpartikel bevorzugt mit einem polymeren Binder fixiert. Der polymere Binder kann Polyvinylidenfluorid (PVDF), Polyethylen, Polypropylen, Polybutadien, Polyisobutylen, Polyester, Polyurethane, Polycarbonate, Polyether oder Mischungen oder Copolymere dieser Stoffe enthalten, bzw. aus diesen Stoffen bestehen. Zur Verbesserung der Leitfähigkeit sowie zur Verbesserung der Haftung auf dem Stromsammler können dem Gemisch aus Lithiummanganoxid und polymeren Binder Zusätze wie z.B. Ruß oder feinteiliger Grafit, bzw. Mischungen davon, zugegeben werden. Die Beschichtung des Stromsammlers erfolgt derart, dass eine Dispersion des Lithiummanganoxids und gegebenenfalls der Zusätze in einer Lösung aus polymerem Binder und einem Lösungsmittel hergestellt wird. Diese Dispersion wird als Nassfilm (mit einer bevorzugten Schichtdicke von < 400 µm) auf der Aluminumfolie abgeschieden. Anschließend wird das Lösungsmittel durch thermische Behandlung bei 80 bis 160 °C, besonders bevorzugt bei 110 bis 140 °C, und einem Druck von < 10 mbar entfernt. Die Porosität der Kathode kann anschließend in bekannter Weise durch Walzen eingestellt werden. Die erhaltene Kathodenbeschichtung hat bevorzugt eine Schichtdicke von 20 bis 200 µm, besonders bevorzugt 50 bis 100 µm.

Die Kathode kann auch so hergestellt werden, dass Lithiummanganoxid auf einem leitfähigen Substrat als Film aufgesputtert wird. Durch anschließendes Tempern in sauerstoffhaltiger Atmosphäre kann das Mn/O-Verhältnis eingestellt werden. Eine weitere Herstellmöglichkeit der Kathode besteht darin, ein leitfähiges Substrat mit Lithiummanganoxid mittels elektrophoretischer Abscheidung zu beschichten.

Schließlich kann die Kathode hergestellt werden, indem zuerst spinellartige Lithiummanganoxidpartikel mit einem polymeren Binder (wie z.B. oben beschrieben) beschichtet werden und dann das so entstandene fließfähige Pulver auf einen Stromsammler aufgebracht und verdichtet wird. Anschließend wird diese Anordnung bei Temperaturen von 100 bis 200 °C behandelt. Dabei verbinden sich die einzelnen Teilchen miteinander, so dass eine gleichmäßige Beschichtung erzeugt wird.

Als Anodenmaterial kann Lithiummetall, Kohlenstoff, Lithiumkobaltnitrid (Li₃₋ₓCoₓN mit 0 < x < 0,5), Lithiumeisennitrid (Li₃₋ₓFeₓN mit 0 < x < 0,5), Lithiumtitanat (Li₁₊ₓTi₂₋ₓO₄ mit 0 ≤ x ≤ 0,33), Niob(V)oxid (Nb₂O₅), Titandioxid (TiO₂) oder Zinn(II)oxid (SnO) einzeln oder in Mischungen dieser Stoffe verwendet werden.

Zur Herstellung der Anode kann eine Beschichtung des Anodenmaterials auf einen Stromsammler (z.B. eine Kupferfolie) aufgebracht werden. Die Beschichtung enthält analog der Kathodenbeschichtung neben dem oder den beschriebenen Anodenaktivmaterialien einen polymeren Binder. Bei Verwendung von anderen Anodenmaterialien als Kohlenstoff, welche ebenfalls zur reversiblen Lithiuminsertion befähigt sind, enthält die Beschichtung gegebenenfalls noch Zusätze zur Verbesserung der Leitfähigkeit wie Kohlenstoff oder feinteilige Metallpulver aus Kupfer oder Silber.

Analog der Kathodenherstellung kann die Beschichtung des Anodenstromsammlers mittels verschiedener Beschichtungstechniken erfolgen (z.B. Beschichtung mit einer Lösungsmitteldispersion, enthaltend das Anodenaktivmaterial, gegebenenfalls den polymeren Binder und gegebenenfalls die Zusätze, oder Aufbringen des Anodenaktivmaterials mittels eines Elektrophoreseverfahrens oder mittels einer Pulverbeschichtung).

Die derart hergestellten Elektroden werden getrocknet und auf die gewünschte Größe zugeschnitten.

Der verwendete Lithium-bis(oxalato)borat (LOB) enthaltende Elektrolyt weist bevorzugt folgende Inhaltsstoffe auf:

Lithium-bis(oxalato)borat,

ein cyclisches Carbonat (besonders bevorzugt in einer Menge von 10 bis 30 Gew.-%),
eine oder mehrere Verbindungen ausgewählt aus acyclischen Carbonaten, aliphatischen Estern, alicyclischen Ethern und aliphatischen difunktionellen Ethern (besonders bevorzugt in einer Menge von 35 bis 55 Gew.-%),
eine oder mehrere Verbindungen ausgewählt aus Lactonen (bevorzugt sind γ-Lactone), Dinitrilen, Verbindungen, die mindestens eine Carbonsäureestergruppe und eine Ethergruppe enthalten, Verbindungen, die mindestens eine Kohlensäureestergruppe und eine Ethergruppe enthalten, Verbindungen, die mindestens eine Nitrilgruppe und eine Ethergruppe enthalten, Trialkylphosphorsäureestern und Trialkylborsäureestern (besonders bevorzugt in einer Menge von 5 bis 40 Gew.-%).

Es wurde gefunden, dass in Elektrolyten mit dieser Merkmalskombination Lithium-bis(oxalato)borat eine befriedigende bis sehr gute Löslichkeit aufweist, die Löslichkeit kaum von der Temperatur abhängt und ionische Leitfähigkeiten von > 9 mS/cm bei Raumtemperatur und > 2,5 mS/cm bei -25 °C erreicht werden.

Zusätzlich zum Lithium-bis(oxalato)borat kann der verwendete Elektrolyt noch ein oder mehrere weitere Lithiumsalze oder Alkalimetall- oder Ammoniumsalze enthalten, wobei das Molverhältnis von Lithium-bis(oxalato)borat zu den weiteren Salzen 99 : 1 bis 80 : 20 beträgt. Die Konzentration von Lithium-bis(oxalato)borat oder der Mischung von Lithium-bis(oxalato)borat und einem oder mehreren der genannten Salze beträgt bevorzugt 0,2 Mol bis 2 Mol/kg Elektrolyt, was je nach evtl. zugesetzten Salzen einem Anteil von bevorzugt 4 bis 35 Gew.-% im fertigen Elektrolyten entspricht. Weitere Lithiumsalze können sein: LiBF₄, LiPF₆, LiAsF₆, LiClO₄, LiF, LiCl, LiBr, Lil, LiCF₃SO₃, LiN(CF₃SO₂)₂, LiN(C₂F₅SO₂)₂, LiC(CF₃)SO₂)₃, sowie andere Alkalimetallsalze, bzw. Ammoniumsalze aus der Klasse der Chelatoborate, wobei das Lithiumkation durch ein anderes Alkalimetallkation oder ein Ammoniumion ersetzt sein kann.

Als cyclisches Carbonat kann Ethylencarbonat (EC), Propylencarbonat (PC), Butylencarbonat (BC), Vinylencarbonat (VC), oder eine Mischungen dieser Carbonate eingesetzt werden.

Ein Inhaltsstoff des Elektrolyten besteht aus einer oder mehreren Verbindungen, ausgewählt aus acyclischen Carbonaten, aliphatischen Estern, alicyclischen Ethern und aliphatischen difunktionellen Ethern.

Acyclische Carbonate können die allgemeine Formel R₁O(CO)OR₂ haben, mit R₁, R₂ = CₙH₂ₙ₊₁ und n = 1 bis 4, und wobei R₁ und R₂ identisch sein können. Beispiele für solche acyclischen Carbonate sind Dimethylcarbonat (DMC), Diethylcarbonat (DEC), Dipropylcarbonat (DPC), Ethylmethylcarbonat (EMC), Methylpropylcarbonat (MPC), Butylmethylcarbonat (BMC), Ethylpropylcarbonat (EPC) und Butylethylcarbonat (BEC). Bevorzugt ist die Verwendung von DMC, DEC, EMC oder einer Mischung dieser Verbindungen. Besonders bevorzugt ist die Verwendung von EMC.

Aliphatische Ester können die allgemeine Formel R₁(CO)OR₂ haben, mit R₁ = H oder CₙH₂ₙ₊₁ und n = 1 bis 4, und R₂ = CₙH₂ₙ₊₁ und n = 1 bis 4. Beispiele für solche aliphatischen Ester sind Methylformat, Ethylformat, Propylformat, Methylacetat, Ethylacetat und Butylacetat. Bevorzugt ist die Verwendung von Propylformat, Ethylacetat oder einer Mischung dieser Verbindungen.

Alicyclische Ether können sein Tetrahydrofuran (THF), oder 2-Methyltetrahydrofuran oder Tetrahydropyran (THP).

Aliphatische, difunktionelle Ether können die allgemeine Formel R₁OR₂OR₃ haben, mit R₁ und R₃ = aliphatische Reste der Formel -CₙH₂ₙ₊₁ und n = 1 bis 4, und mit R₂ = -(CH₂)ₘ und m = 1 bis 4, und wobei R₁ und R₃ identisch sein können. Beispiele für solche aliphatischen, difunktionellen Ether sind Dimethoxyethan (DME) und Diethoxyethan (DEE).

Ein Inhaltsstoff des Elektrolyten besteht aus einer oder mehreren Verbindungen, ausgewählt aus Lactonen, Dinitrilen, Verbindungen, die mindestens eine Carbonsäureestergruppe und eine Ethergruppe enthalten, Verbindungen, die mindestens eine Kohlensäureestergruppe und ein Ethergruppe enthalten, Verbindungen, die mindestens eine Nitrilgruppe und eine Ethergruppe enthalten, Trialkylphosphorsäureestern und Trialkylborsäureestern. Lactone können bevorzugt γ-Lactone, wie γ-Butyrolacton (GBL) oder γ-Valerolacton (GVL) sein.

Dinitrile können die allgemeine Formel CNR₁CN haben, mit R₁ = -(CH₂)ₙ- und n = 2 bis 8. Beispiele sind Glutaronitril (GTN) oder Adiponitril (ADN).

Verbindungen, die mindestens eine Carbonsäureestergruppe und eine Ethergruppe enthalten, können die allgemeine Formel R₁(CO)OR₂OR₃ haben, mit R₁ = -CₙH₂ₙ₊₁ und n = 1 bis 4, R₂ = -(CH₂)ₙ- und n = 2 bis 5, oder R₂ = -(CH₂CH₂O)ₘ- mit m = 2 bis 4, und R₃ = -CₙH₂ₙ₊₁ und n = 1 bis 4. Beispiele für solche Verbindungen sind Methoxy-ethylacetat, Ethoxyethylacetat und 2-(2-Ethoxyethoxy)-ethylacetat.

Verbindungen, die mindestens eine Kohlensäureestergruppe und ein Ethergruppe enthalten, können die allgemeine Formel R₁OR₂O(CO)OR₃ haben, mit R₁, R₃ = -CₙH₂ₙ₊₁ und n = 1 bis 4 und R₂ = -(CH₂)ₙ- und n = 2 bis 5. Ein Beispiel für solche Verbindungen ist (2-Methoxy-ethyl)-methylcarbonat (MOEMC).

Verbindungen, die mindestens eine Nitrilgruppe und eine Ethergruppe enthalten, können die allgemeine Formel R₁OR₂(CN) haben, mit R₁= -CₙH₂ₙ₊₁ mit n = 1 bis 4, und R₂ = -(CH₂)ₘ- mit m = 1 bis 6. Ein Beispiel für solche Verbindungen ist Methoxypropansäurenitril.

Trialkylphosphorsäureester haben die allgemeine Formel (R₁O)(R₂O)(R₃O)(PO), wobei R₁, R₂ und R₃ aliphatische Reste des Typs -CₙH₂ₙ₊₁ mit n = 1 bis 6 darstellen, oder wobei R₁, R₂, R₃ aliphatische Reste des Typs -((CH₂)ₖ-X-)ₗ-CₘH₂ₘ₊₁ mit k = 1 bis 4, l = 1 bis 4, m = 1 bis 4 und X = O, S, oder N(R₄) mit R₄ = CₙH₂ₙ₊₁ mit n = 1 bis 4 darstellen, und wobei die jeweiligen Reste R₁, R₂ und R₃ identisch sein können. Verbindungen dieses Typs können alleine oder in Mischungen verwendet werden. Ein Beispiel für solche Verbindungen ist Trimethylphosphat.

Trialkylborsäureester haben die allgemeine Formel (R₁O)(R₂O)(R₃O)B, wobei R₁, R₂, R₃ aliphatische Reste der Formel -CₙH₂ₙ₊₁ mit n = 1 bis 6 darstellen, oder wobei R₁, R₂, R₃ aliphatische Reste des Typs -((CH₂)ₖ-X-)ₗ-CₘH₂ₘ₊₁ mit k = 1 bis 4, l = 1 bis 4, m = 1 bis 4 und X = O, S, oder N(R₄) mit R₄ = CₙH₂ₙ₊₁ mit n = 1 bis 4 darstellen, und wobei die jeweiligen Reste R₁, R₂ und R₃ identisch sein können. Verbindungen dieses Typs können alleine oder in Mischungen verwendet werden. Ein Beispiel für solche Verbindungen ist Tributylborat.

Zusätzlich kann der Elektrolyt Additive, wie Pyrokohlensäureester (z.B. Pyrokohlensäuredimethylester, Di-tert-butyl-dicarbonat, Pyrokohlensäure-di-tert-butylester), halogenierte organische Carbonate (z.B. Chlorethylencarbonat, 1-Chlorethyl-etylencarbonat), Polyethylenglycolether oder N-Methyloxazolidon enthalten, wobei der Gesamtanteil Additive bevorzugt 0 bis 10 Gew.-%, bezogen auf den fertigen Elektrolyten, beträgt.

Ganz bevorzugt enthält der Elektrolyt folgende Inhaltsstoffe (Zahlenangaben in Gew.-%):

| | |
|---|---|
| Lithium-bis(oxalato)borat | 10 bis 20 |
| Ethylencarbonat | 15 bis 35 |
| mindestens einen der Stoffe Dimethylcarbonat, Diethylcarbonat, Ethylenmethylencarbonat oder Ethylacetat | 35 bis 55 |
| γ-Butyrolacton | 15 bis 35 |

Ein Verfahren zur Herstellung des Elektrolyten kann wie folgt angegeben werden:
Zuerst wird durch Auflösen des Leitsalzes in den Lösungsmittelkomponenten ein Rohelektrolyt hergestellt. Dieser wird durch Zugabe geeigneter Trockenmittel wie z.B. Lithiumhydrid getrocknet. Dann wird das Trockenmittel von dem getrockneten Elektrolyten abgetrennt. Die Abtrennung kann durch Zentrifugieren oder Filtration erfolgen. Die Filtration kann über einem Bett aus Partikeln, welche aus Oxiden, keramischen Materialien oder schwerlöslichen Lithiumsalzen bestehen können, durchgeführt werden. Beispiele für solche Oxide sind Magnesiumoxid, Calciumoxid, Aluminiumoxid, Titandioxid und Zirkonoxid. Beispiele für keramische Materialien sind Siliziumcarbid und Siliziumnitrid. Beispiele für schwerlösliche Lithiumsalze sind Lithiumcarbonat, Lithiummetaborat, Lithiumaluminat und Lithiumphosphat.
Falls als cyclisches Carbonat Ethylencarbonat eingesetzt wird, kann dieses in fester oder flüssiger Form in einem bevorzugten Temperaturbereich von 15 bis 45 °C eingesetzt werden.

Die Vorteile der elektrochemischen Zelle im Vergleich zu einer bekannten Zelle mit einer Kathode aus undotiertem Lithiummanganspinell, einer Kohlenstoffanode und mit einem Elektrolyten aus Lithiumhexafluorophosphat (LiPF₆) sind in dem nur sehr kleinen Abfall der Ladungskapazität bei Raumtemperatur sowie einer verbesserten Retention der Ladungskapazität bei 55 °C zu sehen. Die Ladungseffizienz bei 55 °C liegt nach Durchlaufen der ersten fünf Zyklen bei > 98 %.

Die Vorteile der elektrochemische Zelle im Vergleich zu einer bekannten Zelle mit dotiertem Lithiummanganspinell als Kathode (eine solche Zelle ist mit dem gebräuchlichen Elektrolyten LiPF₆ den bekannten Zellen mit undotiertem Lithiummanganspinell in elektrischer Hinsicht überlegen) liegen neben einem besseren Hochtemperaturverhalten darin, dass die erfindungsgemäße Zelle kein Nickel und (soweit kein Li₃₋ₓCoₓN als Anodenmaterial eingesetzt wird) kein Kobalt enthält. So könnte eine Batterie mit einer solchen Zelle nach Gebrauch entsorgt werden. Die Batterie kann aber auch einer stofflichen Verwertung zugeführt werden. Nach Entfernen des Gehäuses werden Anode, Kathode und Separator voneinander getrennt. Sind die Ableiter der Anode aus Kupfer, können diese durch Behandlung mit aprotischen Lösungsmitteln wie N,N-Dimethylformamid (DMF) oder N-Methyl-pyrrolidon (NMP) von der Anodenbeschichtung getrennt werden und können der Sekundärverhüttung von Altkupfer zugeführt werden. Die abgelöste Anodenbeschichtung wird durch Abpressen vom Lösungsmittel getrennt. Das zurückgewonnene Lösungsmittel kann dabei im Kreislauf geführt werden. Das abgetrennte Anodenmaterial und die Separatoren können anschließend thermisch verwertet werden. Enthält das Anodenmaterial Lithiumkobaltnitrid oder Zinn(II)verbindungen, so können diese dem Sekundärkobaltkreislauf bzw. dem Zinnrecycling zugeführt werden.

Bestehen die Ableiter der Kathode aus Aluminium, können diese durch Laugung mit aprotischen Lösungsmitteln wie DMF oder NMP von der Kathodenbeschichtung getrennt werden. Das Aluminium kann wiederverwendet werden und das abgetrennte Lithiummanganoxid kann nach Zusatz von Eisenoxid in einem Hochofenprozess zu Ferromangan reduziert werden, welches in der Stahlindustrie eingesetzt werden kann. Das Lithium findet sich dabei in der Schlacke wieder. Alternativ kann das Manganoxid durch Aufschmelzen mit Siliziumdioxid verschlackt werden und im Straßen- und Wegebau verwendet werden. Von Vorteil ist weiterhin, dass der halogenfreie Elektrolyt Lithiumbis(oxalato)borat nicht gesondert abgetrennt werden muss.

Grundsätzlich gestaltet sich das Recycling einer Batterie, welche als Kathodenmaterial ein Mischoxid mit lediglich zwei verschiedenen Metallen enthält, wesentlich einfacher als das Recycling einer Batterie mit eine Kathode, die ein Mischoxid mit mehr als zwei Metallen enthält.

Der Gegenstand der Erfindung wird anhand von Beispielen näher erläutert.

### Beispiel 1: Herstellung einer Kathode mit spinellartigem Lithiummanganoxid

34,8 g Lithiummanganoxid Li_{1,05}Mn₂O_{4,16} mit Spinellstruktur, 2 g Ruß und 2 g Grafit wurden in 24 g einer 5 %-igen Lösung von Polyvinylidenfluorid (PVDF) in N-Methylpyrrolidon (NMP) dispergiert. Zur Einstellung des Feststoffgehaltes auf 33,3 Gew.-% wurden 57,2 g weiteres NMP zugegeben. Die Dispersion wurde mittels einer Rakel auf eine Aluminiumfolie aufgetragen, so dass nach Entfernung des Lösungsmittels durch Trocknung bei 120 °C und 10 mbar Druck eine Beschichtung mit einem Flächengewicht von etwa 8 mg/cm² erhalten wurde.

### Beispiel 2: Herstellung einer Anode mit Grafit

Für die Beschichtung der Anode wurden 38 g Grafit in 40 g einer 5 %-igen Lösung von PVDF in NMP dispergiert. Zur Einstellung eines Feststoffgehaltes von 30 Gew.-% wurden 55,3 g NMP zugegeben. Die Dispersion wurde mittels einer Rakel auf eine Aluminiumfolie aufgetragen, so dass nach Entfernung des Lösungsmittels durch Trocknung bei 120 °C und 10 mbar Druck eine Beschichtung mit einem Flächengewicht von etwa 4 mg/cm² erhalten wurde.

### Beispiel 3: Herstellung eines Elektrolyten

402 g festes Ethylencarbonat wurden in 493 g Dimethylcarbonat gelöst. Zu dieser Lösung wurden 105 g Lithiumbis(oxalato)borat und 2 g Lithiumhydrid zugegeben. Nach 2-stündigem Rühren wurde das Lithiumhydrid durch Filtration über ein Bett von Aluminiumoxid neutral entfernt. Der erhaltene Elektrolyt wies eine Lithiumkonzentration von 0,54 mol/kg Lösung auf und hatte einen Wassergehalt von < 20 ppm (Karl-Fischer-Methode).

### Beispiel 4: Bestimmung der Ladungseffizienz einer Halbzelle im ersten Lade-/Entladezyklus

Die Ladungseffizienz der Kombination aus dem Kathodenmaterial aus Beispiel 1 und des Elektrolyten aus Beispiel 3 wurde mittels Cyclovoltammetrie bestimmt.

Eine Kathode aus Beispiel 1, ein Separator aus mikroporösem Polypropylen (Dicke 25 µm) ein Separator aus einem Polypropylenvlies (Dicke 300 µm) und eine Anode aus Lithiummetall wurden als stapelförmige Anordnung in eine gewöhnliche Testzelle, wie sie auch kommerziell erhältlich ist, eingebracht. Die Zelle wurde mit dem Elektrolyten aus Beispiel 3 befüllt, wobei sich der Elektrolyt gleichmäßig in der Zelle verteilte, so dass die Elektroden und die Separatoren gleichmäßig mit Elektrolyt benetzt waren. Danach wurde die Zelle verschlossen.

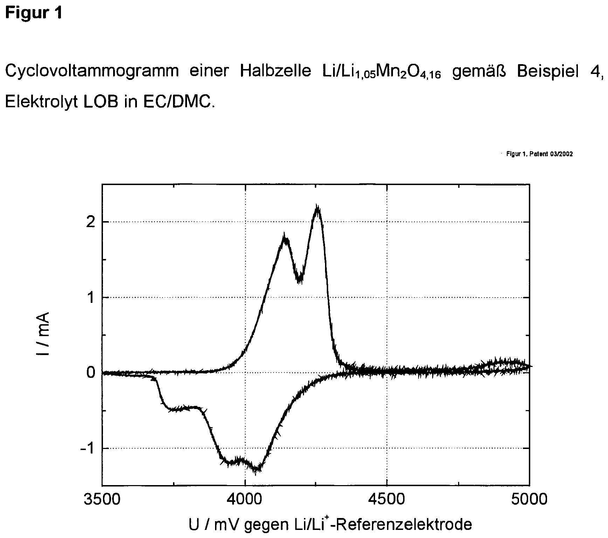

Diese Halbzelle wurde an einen Potentiostaten/Galvanostaten mit Funktionsgenerator (Sycopel AEW 1000-2) angeschlossen. Ausgehend von einem Ruhepotential von 3500 mV wurde das Potential mit einer Rate von 75 µV/s auf ein Potential von 5000 mV erhöht, anschließend mit der gleichen Rate auf ein Potential von 3000 mV abgesenkt und danach wieder auf das Ausgangspotential von 3500 mV erhöht. Der während des Experiments fließende Strom wurde in Intervallen von 0,1 mV registriert. Das aufgenommene Cyclovoltammogramm ist in Figur 1 dargestellt. Durch Integration wurde die während der Ladung bzw. Entladung fließende Ladungsmenge bestimmt, anschließend wurde die Ladungseffizienz berechnet (Ladungseffizienz = während der Entladung geflossene Ladungsmenge / während der Ladung geflossene Ladungsmenge). Erhalten wurde einen Wert von 96,5 %, was einen Verlust von 3,5 % bedeutet. Im Vergleich zu einer bei Angell (ECS, 5, (1), A26-A29 (2002) beschriebenen Halbzelle (Kathode: dotiertes Lithiumnickeloxid, Elektrolyt: Lithiumbis(oxalato)borat in EC/EMC) mit einem Verlust von 13,9 % bedeutet dies einen um den Faktor 4 geringeren Verlust der erfindungsgemäßen Halbzelle.

### Beispiel 5: Herstellung einer elektrochemischen Zelle

Aus den beschichteten Folien wurden zuerst die Elektroden hergestellt, welche so beschaffen sind, dass die Abmessungen der Anode größer als die der Kathode sind. Dadurch wurde gewährleistet, dass der Kathode immer eine Anodenfläche gegenübersteht. Mittels eines Stanzwerkzeuges wurden Kathodenscheiben mit einem Durchmesser von 13 mm und mit einem weiteren Stanzwerkzeug Anodenscheiben mit einem Durchmesser von 15 mm hergestellt.

Der in der Batterie verwendete Separator ist von seinen Abmessungen her größer als die Anode, so dass eine elektrische Isolierung der beiden Elektroden gewährleistet ist. Separatoren wurden mit einem Durchmesser von 20 mm durch Ausstanzen hergestellt. Der Separator besteht aus mikroporösem Polypropylen und weist eine Dicke von 25 µm und eine Porosität von 37 Vol.-% auf.

Eine Kathode, ein Separator und eine Anode wurden als stapelförmige Anordnung in eine gewöhnliche Testzelle, wie sie auch kommerziell erhältlich ist, eingebracht. Kathode, Anode und Separator wurden mit dem Elektrolyten aus Beispiel 3 getränkt, wobei sich der Elektrolyt gleichmäßig in der Zelle verteilte, so dass die Elektroden und der Separator gleichmäßig mit Elektrolyt benetzt waren. Danach wurde die Zelle verschlossen.

### Beispiel 6: Bestimmung der Ladungskapazität in Abhängigkeit von der Zyklenzahl bei 55 °C

Für die Ermittlung der Ladungsretention (Erhalt der Ladungskapazität in Abhängigkeit von der Zyklenzahl) wurden zwei nach Beispiel 5 hergestellte Testzellen (Zellen 6a und 6b) an ein Batterietestgerät (MACCOR 4000) angeschlossen und in einer thermostatgeregelten Kammer auf 55 °C erwärmt. Nachdem die jeweilige Testzelle eine konstante Temperatur erreicht hatte, wurde die Zelle geladen und wieder entladen, wobei verschiedene, weiter unten beschriebene Parameter eingestellt wurden. Dieser Zyklus wurde bis zu einer Zyklenzahl von 301 wiederholt.

Im 1. Ladezyklus wurde zuerst eine Stromdichte von 0,1 mA/cm² eingestellt, wobei die Zellspannung anstieg. Bei Erreichen einer Zellspannung von 4,3 V wurde anschließend bei konstanter Ladespannung von 4,3 V solange nachgeladen, bis die Ladestromdichte auf 0,01 mA/cm², also auf 1/10 des ursprünglichen Wertes, gefallen war. Im darauf folgenden 1. Entladezyklus wurde eine Stromdichte von 0,2 mA/cm² eingestellt. Der Entladevorgang wurde bei eine Zellspannung von 3,0 V beendet.

Anschließend durchliefen die Zellen verschiedene Lade- und Entladezyklen (bis zur einer Zyklenzahl von 301) bei drei verschiedenen Stromdichten. Zu Beginn eines Ladezyklus wurde die Zelle mit einer konstanten Stromdichte bis zum Erreichen einer Zellspannung von 4,3 V geladen und anschließend bei konstanter Spannung von 4,3 V nachgeladen. Der Ladevorgang wurde jeweils beendet, wenn die Ladestromdichte auf 20 % des ursprünglichen Wertes gefallen war.

Bei den ersten 5 Ladezyklen betrug die anfängliche konstante Stromdichte 0,2 mA/cm², bei den zweiten 5 Ladezyklen 1,0 mA/cm² und bei den dritten 5 Ladezyklen 1,5 mA/cm². Dementsprechend wurde die Nachladung bei Absinken der Ladestromdichte auf 0,04 mA/cm² (bei den ersten 5 Ladezyklen), 0,2 mA/cm² (bei den zweiten 5 Ladezyklen) und 0,3 mA/cm² (bei den dritten 5 Ladezyklen) beendet.

Bei den ersten 5 Entladezyklen betrug die konstante Stromdichte wie bei den entsprechenden Ladezyklen 0,2 mA/cm², bei den zweiten 5 Entladezyklen 1,0 mA/cm² und bei den dritten 5 Entladezyklen 1,5 mA/cm². Der Entladevorgang wurde jeweils bei einer Zellspannung von 3,0 V beendet.

Diese Routine wurde nach insgesamt 15 Zyklen wiederholt.

In der Figur 2 ist der Verlauf der spezifischen Entladekapazität der Zelle 6a aus Beispiel 6 in Abhängigkeit der ersten 150 Lade-/Entladezyklen dargestellt.

### Vergleichsbeispiel A: Herstellung einer elektrochemischen Zelle entsprechend dem Stand der Technik und Bestimmung der Ladungskapazität

Analog dem Beispiel 5 wurden zwei elektrochemische Zellen (A1 und A2) mit einer undotierten Lithiummanganoxidspinell-Kathode entsprechend Beispiel 1, einer Anode entsprechend Beispiel 2 und einem Elektrolyten aus LiPF₆ hergestellt. Der Elektrolyt wurde wie folgt hergestellt:
412 g festes Ethylencarbonat wurden in 504 g Dimethylcarbonat gelöst. Zu dieser Lösung wurden 84 g Lithiumhexafluorophosphat (LiPF₆) und 2 g Lithiumhydrid zugegeben. Nach 2-stündigem Rühren wurde das Lithiumhydrid durch Filtration über ein Bett von Aluminiumoxid neutral entfernt. Der erhaltene Elektrolyt wies eine Lithiumkonzentration von 0,54 mol/kg auf und hatte einen Wassergehalt von < 20 ppm (Karl-Fischer-Methode).

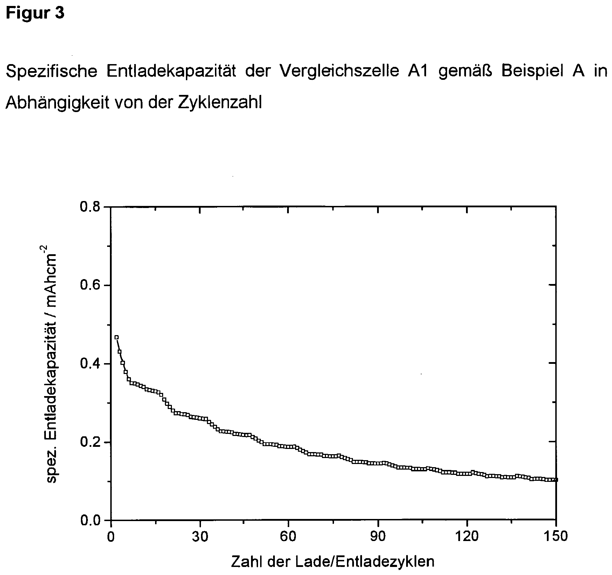

Mit diesen Zellen A1 und A2 wurden die unter Beispiel 6 beschriebenen Messungen durchgeführt. In der Figur 3 ist der Verlauf der spezifischen Entladekapazität der Zelle A1 in Abhängigkeit der ersten 150 Lade-/Entladezyklen dargestellt. Aus der Figur 3 ist ersichtlich, dass die spezifische Entladekapazität der nach dem Stand der Technik hergestellten elektrochemischen Zelle A1 bereits nach wenigen Zyklen drastisch abfiel.

### Beispiel 7: Vergleich der Zellen 6a und 6b mit den Zellen A1 und A2

In der Tabelle 1 sind die spezifischen Entladungskapazitäten und die Ladungseffizienz der erfindungsgemäßen Zellen 6a und 6b und der Vergleichszellen A1 und A2 bei verschiedenen Zyklenzahlen gegenübergestellt.

**Tabelle 1: Spezifische Entladungskapazitäten [in mAh/cm⁻²] und Ladungseffizienz [in %] in Abhängigkeit von der Zyklenzahl**

| Zyklenzahl | | 6a | 6b | A1 | A2 |
|---|---|---|---|---|---|
| 5 | spez. Kapazität | 0,583 | 0,585 | 0,379 | 0,446 |
| | Ladungseffizienz | 98,1 | 97,7 | 90,4 | 89,1 |
| 50 | spez. Kapazität | 0,520 | 0,512 | 0,203 | 0,225 |
| | Ladungseffizienz | 98,7 | 98,8 | 93,9 | 94,2 |
| 100 | spez. Kapazität | 0,443 | 0,416 | 0,132 | 0,148 |
| | Ladungseffizienz | 99,9 | 99,7 | 98,8 | 99,0 |
| 150 | spez. Kapazität | 0,353 | 0,322 | 0,101 | 0,120 |
| | Ladungseffizienz | 99,9 | 99,9 | 99,3 | 99,3 |

Wie aus der Tabelle 1 ersichtlich ist, weisen die Zellen 6a und 6b eine deutlich höhere Entladekapazität und eine deutlich höhere Ladungseffizienz auf.

## Patentansprüche

1. Verwendung eines Elektrolyten, der als Leitsalz Lithiumbis(oxalato)borat (LOB) in aprotischen Lösungsmitteln enthält, in einer elektrochemischen Zelle, die eine Kathode mit Lithiummanganoxid mit Spinellstruktur, einen Separator und als Anodenmaterial Kohlenstoff, Lithiumkobaltnitrid (Li₃₋ₓ-CoₓN mit 0 < x < 0,5), Lithiumeisennitrid Li₃₋ₓFeₓN mit 0 < x < 0,5), Lithiumtitanat (Li₁₊ₓTi₂₋ₓO₄ mit 0 ≤ x ≤ 0,33), Niob(V)oxid (Nb₂O₅), Titandioxid (TiO₂) oder Zinn(II)oxid (SnO) einzeln oder in Mischungen dieser Stoffe enthält, zur Retention der Ladungskapazität bei 55 °C.

2. Verwendung nach Anspruch 1, **dadurch gekennzeichnet, dass** das Lithiummanganoxid mit Spinellstruktur ein Li/Mn-Atomverhältnis von 0,5 bis 2 und ein O/Mn-Atomverhältnis von 2 bis 3 aufweist.

3. Verwendung nach Anspruch 1 oder 2, **dadurch gekennzeichnet, dass** die rechnerische Oxidationszahl des Mangans 3,0 bis 3,8 beträgt.

4. Verwendung nach einem der Ansprüche 1 bis 3, **dadurch gekennzeichnet, dass** das Lithiummanganoxid eine Partikelgröße d₅₀ von 1 bis 100 µm aufweist.

5. Verwendung nach einem der Ansprüche 1 bis 4, **dadurch gekennzeichnet, dass** der Elektrolyt folgende Stoffe enthält:
Lithium-bis(oxalato)borat,
ein cyclisches Carbonat,
eine oder mehrere Verbindungen ausgewählt aus acyclischen Carbonaten, aliphatischen Estern, alicyclischen Ethern und aliphatischen difunktionellen Ethern,
eine oder mehrere Verbindungen ausgewählt aus Lactonen (bevorzugt sind γ-Lactone), Dinitrilen, Verbindungen, die mindestens eine Carbonsäureestergruppe und eine Ethergruppe enthalten, Verbindungen, die mindestens eine Kohlensäureestergruppe und eine Ethergruppe enthalten, Verbindungen, die mindestens eine Nitrilgruppe und eine Ethergruppe enthalten, Trialkylphosphorsäureestern und Trialkylborsäureestern.

6. Verwendung nach einem der Ansprüche 1 bis 5, **dadurch gekennzeichnet, dass** der Elektrolyt folgende Stoffe enthält (Zahlenangaben in Gew.-%):
| | |
|---|---|
| Lithium-bis(oxalato)borat | 10 bis 20 |
| Ethylencarbonat mindestens einen der Stoffe Dimethylcarbonat, | 15 bis 35 |
| Diethylcarbonat, Ethylenmethylencarbonat oder Ethylacetat | 35 bis 55 |
| γ-Butyrolacton | 15 bis 35 |

## Claims

1. Use of an electrolyte, which contains lithium bis(oxalato)borate (LOB) in aprotic solvents as a conducting salt, in an electrochemical cell, which contains a cathode with lithium manganese oxide having a spinel structure, a separator, and as anode material carbon, lithium cobalt nitride (Li₃₋ₓCoₓN where 0 < x < 0.5), lithium iron nitride (Li₃₋ₓFeₓN where 0 < x < 0.5), lithium titanate (Li₁₊ₓTi₂₋ₓO₄ where 0 ≤ x ≤ 0.33), niobium(V) oxide (Nb₂O₅), titanium dioxide (TiO₂) or tin(II) oxide (SnO), individually or in mixtures of these substances, for the retention of the charging capacity at 55 °C.

2. Use according to claim 1, **characterised in that** the lithium manganese oxide having a spinel structure has an Li/Mn atomic ratio of 0.5 to 2 and an O/Mn atomic ratio of 2 to 3.

3. Use according to claim 1 or 2, **characterised in that** the calculated oxidation number of the manganese is 3.0 to 3.8.

4. Use according to one of claims 1 to 3, **characterised in that** the lithium manganese oxide has a particle size d₅₀ of 1 to 100 µm.

5. Use according to one of claims 1 to 4, **characterised in that** the electrolyte contains the following substances:
lithium bis(oxalato)borate,
a cyclic carbonate,
one or more compounds selected from acyclic carbonates, aliphatic esters, alicyclic ethers and aliphatic difunctional ethers,
one or more compounds selected from lactones (γ-lactones are preferred), dinitriles, compounds containing at least one carboxylic acid ester group and an ether group, compounds containing at least one carbonic acid ester group and an ether group, compounds containing at least one nitrile group and an ether group, trialkyl phosphoric acid esters and trialkyl boric acid esters.

6. Use according to one of claims 1 to 5, **characterised in that** the electrolyte contains the following substances (numerical data in wt.%):
| | |
|---|---|
| lithium bis(oxalato)borate | 10 to 20 |
| ethylene carbonate | 15 to 35 |
| at least one of the substances dimethyl carbonate, diethyl carbonate, ethylene methylene carbonate or ethyl acetate | 35 to 55 |
| γ-butyrolactone | 15 to 35. |

## Revendications

1. Utilisation d'un électrolyte qui contient, dans un solvant aprotique, du bis(oxalato)-borate de lithium (LOB) en tant que sel conducteur, dans une pile électrochimique qui comporte :
- une cathode contenant de l'oxyde de manganèse et de lithium de structure de type spinelle,
- un séparateur,
- et en tant que matériau d'anode, du carbone, du nitrure de cobalt et de lithium (Li₃₋ₓCoₓN où 0 < x < 0,5), du nitrure de fer et de lithium (Li₃₋ₓFeₓN où 0 < x < 0,5), du titanate de lithium (Li₁₊ₓTi₂₋ₓO₄ où 0 ≤ x ≤ 0,33), de l'oxyde de niobium-(V) (Nb₂O₅), du dioxyde de titane (TiO₂) ou de l'oxyde d'étain-(II) (SnO), ces matériaux étant utilisés seuls ou en mélange,
pour la rétention de la capacité de charge à 55 °C.

2. Utilisation conforme à la revendication 1, **caractérisée en ce que** l'oxyde de manganèse et de lithium de structure de type spinelle présente un rapport en atomes Li/Mn valant de 0,5 à 2 et un rapport en atomes O/Mn valant de 2 à 3.

3. Utilisation conforme à la revendication 1 ou 2, **caractérisée en ce que** le degré d'oxydation calculé du manganèse vaut de 3,0 à 3,8.

4. Utilisation conforme à l'une des revendications 1 à 3, **caractérisée en ce que** l'oxyde de manganèse et de lithium présente une taille de particules d₅₀ valant de 1 à 100 µm.

5. Utilisation conforme à l'une des revendications 1 à 4, **caractérisée en ce que** l'électrolyte contient les substances suivantes :
- du bis(oxalato)-borate de lithium,
- un carbonate cyclique,
- un ou plusieurs composé(s) choisi(s) parmi les suivants : carbonates acycliques, esters aliphatiques, éthers alicycliques et diéthers aliphatiques,
- et un ou plusieurs composé(s) choisi(s) parmi les suivants : lactones (de préférence γ-lactones), dinitriles, composés comportant au moins un groupe ester d'acide carboxylique et un groupe éther, composés comportant au moins un groupe ester carbonate et un groupe éther, composés comportant au moins un groupe nitrile et un groupe éther, esters phosphates de trialkyle, et esters borates de trialkyle.

6. Utilisation conforme à l'une des revendications 1 à 5, **caractérisée en ce que** l'électrolyte contient les substances suivantes (les indications chiffrées sont des pourcentages en poids) :
- 10 à 20 % de bis(oxalato)-borate de lithium,
- 15 à 35 % de carbonate d'éthylène,
- 35 à 55 % d'au moins l'un des composés suivants : carbonate de diméthyle, carbonate de diéthyle, carbonate d'éthyle et de méthyle, et acétate d'éthyle,
- et 15 à 35 % de γ-butyrolactone.
